# EUROPÄISCHE PATENTSCHRIFT

(11) **EP 1 140 417 B1**
(45) Veröffentlichungstag und Bekanntmachung des Hinweises auf die Patenterteilung: **07.05.2003**
(21) Anmeldenummer: 99964407.3
(22) Anmeldetag: 04.12.1999
(51) Int. Cl.: B23P 6/00, B23P 15/00, B23K 13/01, F01D 5/00, F01D 5/30

(54) **VERFAHREN ZUM VERBINDEN VON SCHAUFELTEILEN**
METHOD FOR LINKING BLADE PARTS
PROCEDE POUR RELIER DES PARTIES DE PALE

(30) Priorität: 18.12.1998 DE 19858702
(43) Veröffentlichungstag der Anmeldung: 10.10.2001
(73) Patentinhaber: MTU Aero Engines GmbH, 80995 München (DE)
(72) Erfinder: MEIER, Reinhold, D-84405 Dorfen (DE)
(74) Vertreter: Zacharias, Frank L.
(86) Internationale Anmeldenummer: DE9903891
(87) Internationale Veröffentlichungsnummer: WO00037210

(56) Entgegenhaltungen:
- EP-A- 0 376 874
- WO-A-00/03834
- DE-A- 3 831 692
- FR-A- 2 226 241
- GB-A- 1 568 826
- US-A- 2 019 329
- US-A- 4 012 616
- US-A- 4 144 433
- US-A- 4 883 216

## Beschreibung

Die Erfindung betrifft ein Verfahren zum Verbinden von Schaufelteilen einer Gasturbine, wobei ein Schaufelblattabschnitt und wenigstens ein weiteres Schaufelteil bereitgestellt werden.

Schaufeln für Gasturbinen umfassen im wesentlichen ein Schaufelblatt sowie einen Schaufelfuß, mit dem die Schaufel an einem Rotor oder Stator befestigt wird. Zur strömungsmechanischen Beeinflussung können die Schaufeln, d.h. sowohl Leit- als auch Laufschaufeln, innere und/oder äußere Deckbänder aufweisen. Dabei kann es z.B. aus festigkeitstechnischen Gründen erforderlich sein, daß das Schaufelblatt und der Schaufelfuß bzw. die Deckbänder aus unterschiedlichen Werkstoffen bestehen und mithin zunächst einzeln bereitgestellt werden und anschließend miteinander zu verbinden sind. Letzteres gilt auch dann, wenn das Schaufelblatt z.B. aus TiAl pulvermetallurgisch hergestellt wird und nicht zur Herstellung der fertigen Schaufel gieß- oder schmiedbar ist.

Die US-A-4012616 offenbart ein Verfahren zur Verbindung metallischer Bauteile mit nicht rechtwinkligen Querschnitten unter Bildung eines Schmiedegefüges, dessen mechanische Eigenschaften jenen der Bauteile im wesentlichen entsprechen, bei dem eine zur Erwärmung zwischen den Fügeflächen der Bauteile angeordnete Induktionsheizschleife zur Gewährleistung einer gleichmäßigen Erwärmung so ausgebildet ist, dass sie an dicken Bauteilabschnitten näher als an dünnen Bauteilabschnitten positioniert ist. Nach Entfernen der zwischen den Fügeflächen befindlichen Induktionsheizschleife werden die Fügeflächen zusammengepresst.

Aus der US 3,768,147 ist ein Verfahren zur Herstellung einer Schaufel aus einem gegossenen Schaufelblattrohling und einem geschmiedeten Schaufelfuß bekannt, bei dem der Schaufelblattrohling einen erheblich über dessen Querschnittsfläche vergrößerten Fuß und einen ebenfalls vergrößerten Verbindungsabschnitt mit einer Verbindungsfläche aufweist, an die eine Verbindungsfläche einer Schaufelbasis fluchtend positioniert wird, wobei der Schaufelblattrohling und die Schaufelbasis mittels Reibschweißen miteinander verschweißt werden und anschließend aus dem Schaufelblattrohling das Schaufelblatt und aus der Schaufelbasis der Schaufelfuß durch z.B. spanabhebende Bearbeitung hergestellt wird. Dabei erweist sich als nachteilig, daß sowohl das Schaufelblatt als auch der Schaufelfuß zur Bereitstellung der für das Reibschweißen erforderlichen Verbindungsflächen als Rohling vorgesehen werden müssen. Dieses führt neben einem hohen Materialverbrauch zu einer aus vielen Fertigungsschritten bestehenden, teuren und zeitaufwendigen Nachbearbeitung. Zudem tritt beim Schweißen ein erheblicher Wulst in der Verbindungsfläche auf, der ebenfalls zu entfernen ist.

Die nachveröffentliche WO 00/03834 offenbart ein Verfahren zur Reparatur und Herstellung eines integral beschaufelten Rotors für eine Strömungsmaschine, bei dem Schaufeln an einer Umfangsfläche eines Rotorträgers vorgesehenen Stümpfen durch Erregen eines Induktors mit hochfrequenten Strom verschweißt werden, wobei der Induktor im Bereich der Schaufelvorder- und Schaufelhinterkante mit größerem Abstand zur Fügestelle als im Mittenbereich der Schaufel bzw. des Stumpfabschnitts angeordnet wird.

Das der Erfindung zugrundeliegende Problem besteht darin, einzelne, möglichst in ihrer fertigen Form vorliegende Schaufelteile zu einer integralen Schaufel bzw. einem Rotor, fertigungstechnisch möglichst einfach, d.h. ohne viel zusätzliche Bearbeitungsschritte, zu verbinden und ein Verfahren dafür zu schaffen.

Die Lösung des das Verbinden von Schaufelteilen betreffenden Problems ist erfindungsgemäß durch die Merkmale gemäß Anspruch 1 gekennzeichnet.

Ein Vorteil des erfindungsgemäßen Verfahrens besteht darin, daß sich der induzierte, hochfrequente Strom in den sich gegenüberliegenden Verbindungsflächen konzentriert und diese durch die Erwärmung lediglich im oberflächennahen Bereich teigig bzw. schmelzflüssig werden, so daß der Schaufelblattabschnitt und das weitere Schaufelteil lediglich mit vergleichsweise geringer Kraft und über einen äußerst kurzen Zeitraum gegeneinander gedrückt werden. Aus diesem Grund kann das Verfahren auch auf besonders dünnwandige, mechanisch empfindliche oder hohle Schaufelblattabschnitte angewendet werden.

Der Induktor wird umfänglich um die Verbindungsnaht, d.h. den Umfang der Verbindungsflächen des Schaufelblattabschnitts und des weiteren Schaufelteils herum, angeordnet, wobei der Induktor zur Beeinflussung der Erwärmung im Bereich der Schaufelvorderkante und der Schaufelhinterkante mit größerem Abstand zur Verbindungsnaht als im Mittenbereich der Schaufel angeordnet werden kann.

Bevorzugt wird wenigstens der Schaufelblattabschnitt und/oder das weitere Schaufelteil beim Positionieren reibschlüssig gehalten, was aufgrund der vergleichsweisen geringen Anpreßkräfte ohne weiteres auch im Bereich des Schaufelblatts erfolgen kann.

Je nach Anwendungsfall kann es alternativ zweckmäßig sein, wenigstens der Schaufelblattabschnitt und/oder das weitere Schaufelteil beim Positionieren formschlüssig, z.B. in einem Kunststoffblock od.dgl, zu halten.

In einer Ausgestaltung des Verfahrens wird als weiteres Schaufelteil ein Schaufelfuß mit einem die stirnseitige Verbindungsfläche aufweisenden, zweiten Schaufelblattabschnitt bereitgestellt, wobei der Schaufelfuß z.B. einen Schwalbenschwanz oder einen Bolzen oder einen Haken zur lösbaren Befestigung an einem Rotor oder Stator aufweisen kann.

In einer weiteren Ausgestaltung wird als weiteres Schaufelteil ein Deckband mit einem die stirnseitige Verbindungsfläche aufweisenden, zweiten Schaufelblattabschnitt bereitgestellt, wobei in einem weiteren alternativen Ausführungsbeispiel eine erste Verbindungsfläche des Schaufelblattabschnitts mit einem einen zweiten Schaufelblattabschnitt und die stirnseitige Verbindungsfläche aufweisenden Schaufelfuß und eine gegenüberliegende, zweite stirnseitige Verbindungsfläche des Schaufelblattabschnitts mit einem einen zweiten Schaufelblattabschnitt und die stirnseitige Verbindungsfläche aufweisenden Deckbandabschnitt verschweißt wird.

In einem alternativen Ausführungsbeispiel wird als zweites Schaufelteil ein integral zu beschaufelnder Rotorträger bereitgestellt, an dessen Umfangsfläche mehrere vorstehende, jeweils die stimseitigen Verbindungsflächen aufweisende Stumpfabschnitte ausgebildet werden, um so einen integral beschaufelten Rotor zu schaffen.

Der Vorteil einer mit dem Verfahren verbundenen Schaufel besteht in ihrer kostengünstigen Herstellung, da die einzelnen Schaufelteile in ihrer fertigen Form ohne aufwendige Nacharbeitungsschritte miteinander verbunden werden können. Zudem weist das Gefüge in der Verbindungsstelle eine hohe Festigkeit auf.

In einer bevorzugten Ausgestaltung ist die Schaufel eine Laufschaufel und das weitere Schaufelteil ein Schaufelfuß mit einem die stimseitige Verbindungsfläche aufweisenden, zweiten Schaufelblattabschnitt.

Auch bei einem Rotor erweist sich insbesondere aufgrund des vergleichsweise großen, z.B. als Scheibe oder Ring ausgebildeten, Rotorträgers als vorteilhaft, daß die zu verbindenden Schaufelteile bereits in ihrer fertigen Form vorliegen, der Verschweißvorgang verhältnismäßig schnell durchgeführt werden kann und keine aufwendigen Nacharbeitungsschritte erforderlich sind.

Weitere Ausgestaltungen der Erfindung sind in den Unteransprüchen beschrieben.

Im folgenden wird die Erfindung anhand von Ausführungsbeispielen unter Bezugnahme auf eine Zeichnung näher erläutert. Es zeigen:
- Fig. 1: eine Ansicht in perspektivischer und schematischer Darstellung eines Schaufelblattabschnitts und eines Schaufelfußes, die gemäß einem Ausführungsbeispiel des erfindungsgemäßen Verfahrens miteinander verschweißt werden,
- Fig. 2: eine Ansicht in perspektivischer und schematischer Darstellung des Schaufelblatts gemäß Fig. 1, bei dem an einer gegenüberliegenden Verbindungsfläche des Schaufelblattabschnitts ein Deckbandabschnitt dargestellt ist,
- Fig. 3: eine Ansicht in perspektivischer und schematischer Darstellung eines Schaufelblattabschnitts mit einem Schaufelfuß, der gemäß einem weiteren Ausführungsbeispiel des erfindungsgemäßen Verfahrens mit einem Deckbandabschnitt verschweißt wird,
- Fig. 4: eine schematische Draufsicht auf eine Verbindungsfläche, um die ein mit einer Stromquelle verbundene Induktor gemäß einer Ausgestaltung des erfindungsgemäßen Verfahrens angeordnet ist, und
- Fig. 5: eine Ansicht in perspektivischer und schematischer Darstellung eines Rotors, dessen umfängliche Stumpfabschnitte jeweils mit einem Schaufelblattabschnitt gemäß einem weiteren Ausführungsbeispiel des erfindungsgemäßen Verfahrens verschweißt sind.

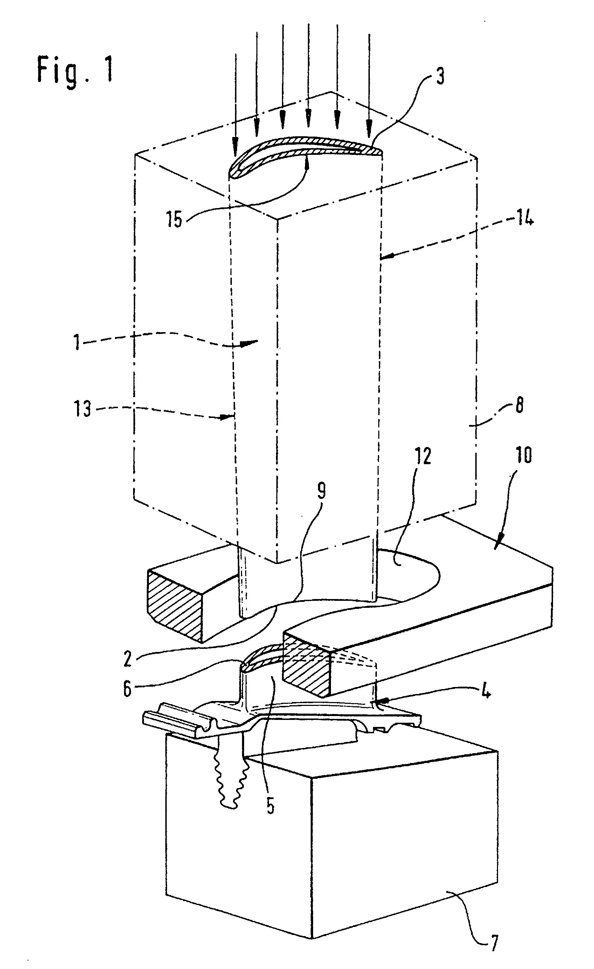

Fig. 1 zeigt einen Schaufelblattabschnitt 1 mit einer Verbindungsfläche 2, an der der Schaufelblattabschnitt 1 mit wenigstens einem weiteren Schaufelteil gemäß einer Ausgestaltung des erfindungsgemäßen Verfahrens verschweißt wird. Der Schaufelblattabschnitt 1 ist hohl und pulvermetallurgisch aus TiAl hergestellt. Alternativ können mit dem erfindungsgemäßen Verfahren auch Schaufelblattabschnitte 1 aus Nioder Co-Basislegierungen ebenso wie massive Schaufelblattabschnitte 1 bzw. weitere Schaufelteile aus diesen Werkstoffen bzw. Geometrien verschweißt werden.

An seiner der ersten Verbindungsfläche 2 gegenüberliegenden Stirnfläche weist der Schaufelabschnitt 1 eine zweite stirnseitige Verbindungsfläche 3 zur Verbindung mit einem weiteren Schaufelteil auf.

Zur Herstellung einer integralen (Lauf-)Schaufel für eine Gasturbine wird neben dem Schaufelblattabschnitt 1 ein Schaufelfuß 4 bereitgestellt, der einen zweiten Schaufelblattabschnitt 5 mit einer stirnseitigen Verbindungsfläche 6 aufweist. Die Verbindungsfläche 6 des Schaufelfußes 4 entspricht in ihrer Form und Größe im wesentlichen der Verbindungsfläche 2 des Schaufelblattabschnitts 1. Die Verbindungsflächen 2,3,6 können im wesentlichen eben oder z.B. auch gekrümmt ausgebildet sein.

Der Schaufelfuß 4 hat an seinem der Verbindungsfläche 6 entfernten Ende einen sog. Schwalbenschwanz zur lösbaren Befestigung an einem Rotorkranz.

Sowohl die Verbindungsflächen 2,3 des Schaufelblattabschnitts 1 als auch die Verbindungsfläche 6 des Schaufelfußes 4 weisen ihre endgültige bzw. fertige Querschnittsgröße auf und werden nicht mit Übermaß vorgesehen. Des weiteren wird weder an dem Schaufelblattabschnitt 1 noch dem zweiten Schaufelblattabschnitt 5 des Schaufelfußes 4 eine Verdickung od.dgl. zur Verbesserung des Schweißvorgangs oder zum Halten des Schaufelblattabschnitts 1 bzw. des Schaufelfußes 4 vorgesehen.

Der Schaufelfuß 4 ist vorliegend in einen Halteblock 7 ortsfest gehalten. Der Schaufelblattabschnitt 1 ist in einer gestrichelt angedeuteten, verfahrbaren Halteeinrichtung 8 gehalten, wobei dieses zum einen mit z.B. zwei Greifern reibschlüssig oder in einem Block, z.B. aus Kunststoff, formschlüssig erfolgen kann.

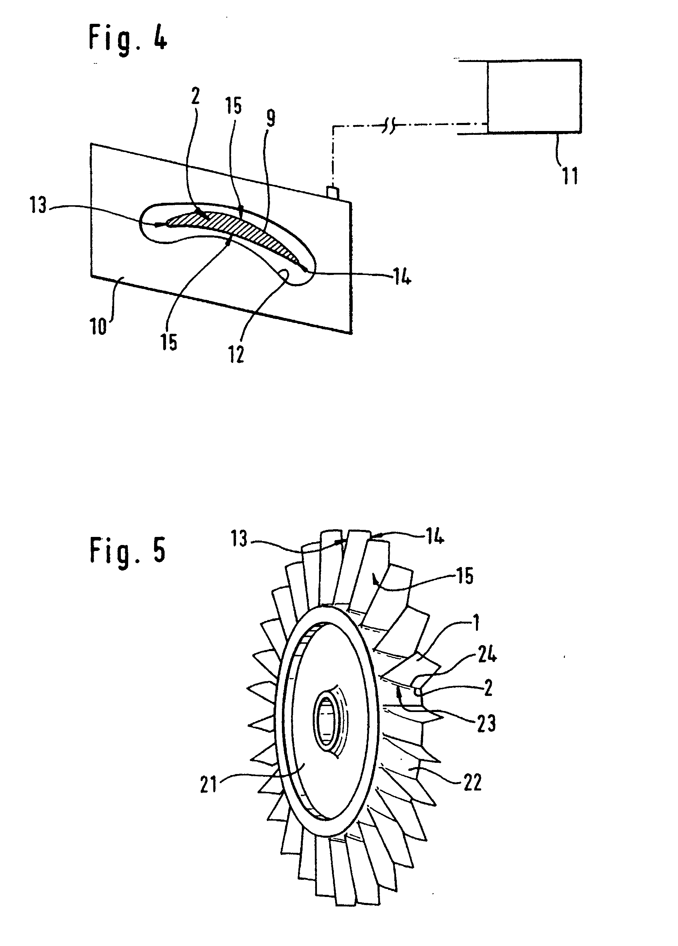

Wie in Fig. 1 zu erkennen ist, werden die Verbindungsflächen 2 und 6 des Schaufelblattabschnitts 1 und des Schaufelfußes 4 vor dem Schweißvorgang im wesentlichen fluchtend und geringfügig beabstandet zueinander positioniert. Benachbart zu den Verbindungsflächen 2, 6 wird um deren Umfang 9 herum ein geschnitten dargestellter Induktor 10 angeordnet, welcher in einer mit Fig. 4 schematisch dargestellten Spannungsquelle 11 elektrisch verbunden ist. Der Induktor 10 wird aus einem im wesentlichen ebenen Kupferblech mit einer Dicke von etwa 5 mm ausgebildet und überträgt den Schweißstrom in die zu verschweißenden Schaufelteile. Gemäß Fig. 4 ist der Abstand zwischen dem Induktor 10 bzw. einer Innenkante 12 seines Ausschnitts und der Verbindungsfläche 2 des Schaufelblattabschnitts 1 bzw. der Verbindungsfläche 6 des Schaufelfußes 4 im Bereich der Schaufelvorder- und Schaufelhinterkante 13,14 größer als im Mittenbereich 15, um eine gleichmäßige Erwärmung der Verbindungsflächen 2,6 des Schaufelblattabschnitts 1 bzw. Schaufelfußes 4 beim anschließenden Schweißvorgang zu erzielen. Die Geometrie des Ausschnitts, bzw. der Innenkante 12, in dem Induktor 10 ist je nach Anwendungsfall so zu wählen, daß der Werkstoff nur an der Füge- oder Verbindungsstelle, d.h. den Verbindungsflächen 2 und 6, teigig bis in den oberflächennahen Bereichen (nahezu) schmelzflüssig wird, um einen schnellen Schweißvorgang zu ermöglichen und eine Nachbearbeitung der Verbindungs- oder Fügestelle nach dem Schweißvorgang weitestgehend zu vermeiden.

Letzteres läßt sich durch Erregen des Induktors 10 mit hochfrequentem Strom mit einer Frequenz von etwa 1,2 MHz erzielen, wobei die Frequenz in Abhängigkeit von der Geometrie der Verbindungsflächen gewählt wird und im allgemeinen über 0,75 MHz liegt. Während des Schweißvorgangs wird der in der Halteeinrichtung 8 gehaltene Schaufelblattabschnitt 1 entsprechend den in Fig. 1 dargestellten Pfeilen verfahren, so daß sich die lediglich in ihren oberflächennahen Bereichen teigigen Verbindungsflächen 2 und 6 des Schaufelblattabschnitts 1 des Schaufelfußes 4 berühren und miteinander verschweißt werden, wobei nur verhältnismäßig wenig Material flächig nach außen gedrückt werden braucht und sich ein festes Schmiedegefüge bildet.

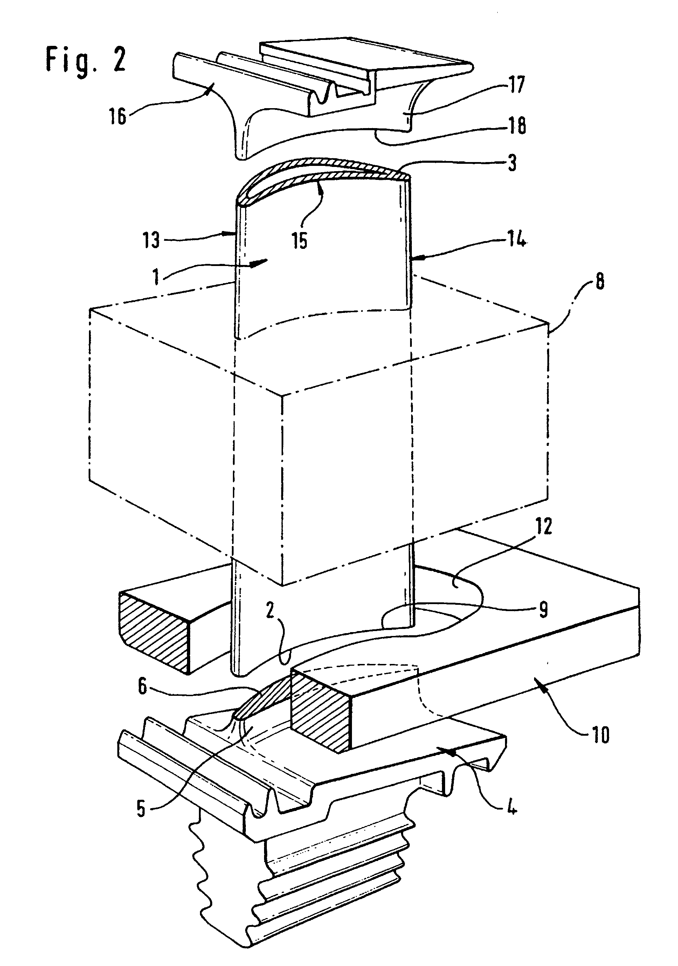

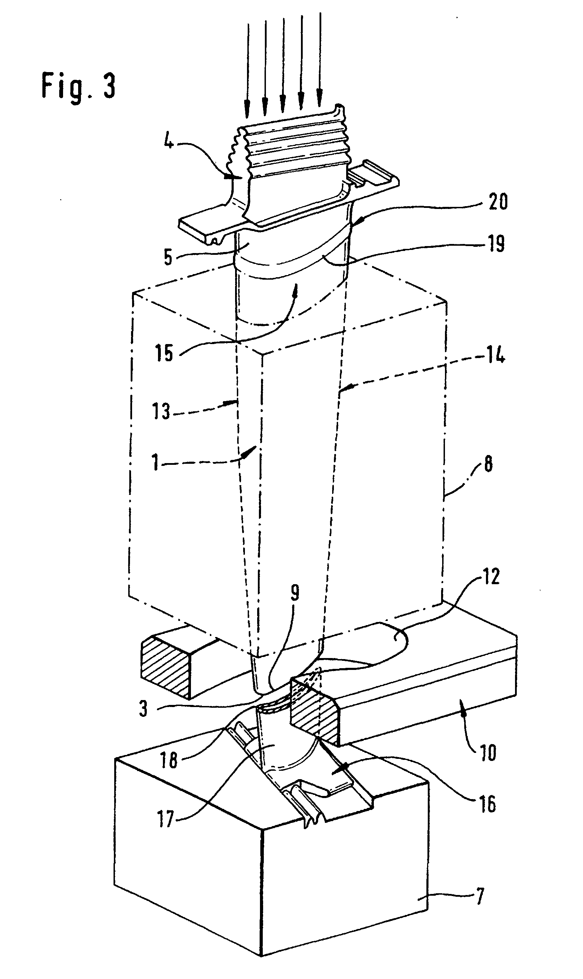

Fig. 2 zeigt eine ähnliche Anordnung wie Fig. 1 mit einem Schaufelblattabschnitt 1, der eine erste Verbindungsfläche 2 aufweist, zu der eine im wesentlichen fluchtende und geringfügige beabstandete Verbindungsfläche 6 eines Schaufelfußes 4 positioniert ist. Um die Verbindungsflächen 2 und 6 ist ein geschnitten dargestellter Induktor 10 mit einem Ausschnitt und einer Innenkante 12 angeordnet. Der Schaufelblattabschnitt 1 ist in einer Halteeinrichtung 8 verfahrbar gehalten. Gemäß einem weiteren und in Fig. 3 näher erläuterten Ausführungsbeispiel ist an einer der ersten Verbindungsfläche 2 des Schaufelblattabschnitts 1 gegenüberliegenden Stirnseite eine zweite Verbindungsfläche 3 vorgesehen, die an einen Deckbandabschnitt 16 mit einem zweiten Schaufelblattabschnitt 17 mit einer stimseitigen Verbindungsfläche 18 durch Induktionsschweißen mit hochfrequentem Strom geschweißt wird.

Fig. 3 zeigt die in Fig. 2 schematisch angedeutete Anordnung, wobei ein Schaufelfuß 4 bereits mit seiner Verbindungsfläche 6 mit einer ersten Verbindungsfläche 2 eines Schaufelblattabschnitts 1 durch Induktionsschweißen mittels hochfrequentem Strom gemäß einem Ausführungsbeispiel des erfindungsgemäßen Verfahrens verschweißt ist. Fig. 3 zeigt eine vergleichsweise kleine Wulst 19 im Bereich einer Verbindungsnaht 20, die nur geringfügig vorsteht und je nach Anforderungsfall toleriert werden kann oder nur geringfügig nachbearbeitet werden muß.

Ähnlich wie in der Anordnung in Fig. 1 ist ein Deckbandabschnitt 16 in einem ortsfesten Halter 7 so gehalten, daß seine Verbindungsfläche 18 im wesentlichen fluchtend und geringfügig beabstandet zu der zweiten Verbindungsfläche 3 des Schaufelblattabschnitts 1 zur Vorbereitung des Schweißvorgangs angeordnet ist.

In gleicher Weise wird ein Induktor 10 mit einem Ausschnitt und einer Innenkante 12 umfänglich um die zu verschweißenden Verbindungsflächen 3 und 18 angeordnet. Der Induktor 10 ist entsprechend Fig. 4 mit einer Spannungsquelle 11 elektrisch verbunden, um den Schweißstrom in die zu verschweißenden Bauteile zu übertragen, wobei der größte Stromfluß in den oberflächennahen Bereichen der Verbindungsflächen erfolgt. Während des Schweißvorgangs wird der in einer Halteeinrichtung 8 reib- oder formschlüssig in herkömmlicher Weise gehaltene Schaufelblattabschnitt 1 in Richtung der Pfeile auf die Verbindungsfläche 18 des Deckbandabschnitts 16 verfahren, so daß sich die in ihren oberflächennahen Bereichen teigig bzw. ggf. nahezu schmelzflüssig gewordenen Verbindungsflächen 3 und 18 berühren. In diesem zweistufigen Ausführungsbeispiel des erfindungsgemäßen Verfahrens wird also zunächst der Schaufelfuß 4 an eine erste Verbindungsfläche 2 und anschließend der Deckbandabschnitt 16 an eine gegenüberliegende, zweite Verbindungsfläche 3 des Schaufelblattabschnitts 1 durch Induktionsschweißen mittels hochfrequenten Strom zur Herstellung einer integralen (Lauf-)Schaufel aus einzelnen Schaufelteilen 1,4,16 geschweißt.

In einer Draufsicht gemäß Fig. 4 ist ein mit einer Spannungsquelle 11 verbundener Induktor 10 mit einem Ausschnitt dargestellt, dessen Innenkante 12 im Bereich der Schaufelvorderkante 13 und der Schaufelhinterkante 14 weiter als im Mittenbereich 15 von der Verbindungsnaht 20 bzw. dem Umfang 9 der Verbindungsflächen 2,3,6,18 des Schaufelblattabschnitts 1 einerseits bzw. des Schaufelfußes 4 oder Deckbandabschnitts 16 andererseits entfernt ist.

Fig. 5 zeigt ein weiteres Ausführungsbeispiel des erfindungsgemäßen Verfahrens, bei dem als weiteres Schaufelteil ein integral zu beschaufelnder Rotorträger 21 bereitgestellt wird. Der Rotorträger 21 kann als Scheibe oder Ring ausgebildet sein und als Verdichter- oder Turbinenrotor in einer Gasturbine zum Einsatz kommen. Über eine Umfangsfläche 22 des Rotorträgers 21 stehen mehrere, im allgemeinen äquidistant angeordnete Stumpfabschnitte 23 vor, die jeweils stirnseitig eine Verbindungsfläche 24 aufweisen und deren äußere Oberfläche sich aus festigkeits- und aerodynamischen Aspekten an die Umfangsfläche 22 des Rotorträgers 21 anschmiegt.

Zur Herstellung eines integral beschaufelten Rotors, der ein Verdichter- oder ein Turbinenrotor sein kann, wird an die stirnseitige Verbindungsfläche 24 der Stumpfabschnitte 23 jeweils ein Schaufelblattabschnitt 1 mit seiner Verbindungsfläche 2 fluchtend und geringfügig beabstandet positioniert. Um den Umfang 9 der Verbindungsfläche 2 des Schaufelblattabschnitts 1 bzw. der Verbindungsfläche 24 des Stumpfabschnitts 23 wird ein Induktor 10 in der oben beschriebenen Weise an geordnet. Für den Schweißvorgang wird der Induktor 10 mit hochfrequentem Strom erregt und der Schaufelblattabschnitt 1 und der Rotorträger 21 zusammengefahren, so daß sich ihre erwärmten, lediglich in ihren oberflächennahen Schichten schmelzflüssigen Verbindungsflächen 2 und 24 berühren und miteinander verschweißt werden. Vorliegend ist es zweckmäßig, daß der Schaufelblattabschnitt 1 beweglich und der Rotorträger 21 ortsfest gehalten wird. Dieser Vorgang wird nachfolgend für alle weiteren Stumpfabschnitte 23 wiederholt, so daß abschließend ein integral beschaufelter Rotor aus dem Rotorträger 21 und den sich im wesentlichen radial erstreckenden, an die Stumpfabschnitte 23 mittels hochfrequentem Strom geschweißten Schaufelblattabschnitten 1 entsteht.

Das Verfahren zum Verbinden von Schaufelteilen läßt sich für Lauf- und Leitschaufeln sowie Rotorkränze von Gasturbinen aus verschiedensten Werkstoffen, wie z.B. TiAl, anwenden.

## Patentansprüche

1. Verfahren zum Verbinden von Schaufelteilen einer Gasturbine, wobei ein Schaufelblattabschnitt (1) und wenigstens ein weiteres Schaufelteil (4,16,21) bereitgestellt werden, der Schaufelblattabschnitt (1) mit wenigstens einer stimseitigen Verbindungsfläche (2) und das weitere Schaufelteil (4,16,21) mit einer stimseitigen Verbindungsfläche (6,18,24) bereitgestellt werden, ein Induktor (10) benachbart zu den Verbindungsflächen (2,3,6,18,24) des Schaufelblattabschnitts (1) und des zweiten Schaufelteils (4,16,21) angeordnet wird, die Verbindungsflächen (2,3,6,18,24) des Schaufelblattabschnitts (1) und des zweiten Schaufelteils (4,16,21) im wesentlichen fluchtend und beabstandet zueinander positioniert werden und der Schaufelblattabschnitt (1) und das weitere Schaufelteil (4,16,21) durch Erregen des Induktors (10) mit hochfrequentem Strom und durch Zusammenfahren unter Berührung ihrer Verbindungsflächen (2,3,6,18,24) miteinander verschweißt werden, **dadurch gekennzeichnet, dass** die Verbindungsflächen (2,3,6,18,24) des Schaufelblattabschnitts (1) und des weiteren Schaufelteils (4,16,21) mit einem Abstand von etwa 2mm zueinander positioniert werden und der Induktor (10) umfänglich um die Verbindungsflächen (2,3,6,18,24) des Schaufelblattabschnitts (1) und des weiteren Schaufelteils (4,16,21) herum angeordnet wird, wobei der Induktor (10) im Bereich der Schaufelvorderkante (13) und der Schaufelhinterkante (14) mit größerem Abstand zur Verbindungsnaht (20) als im Mittenbereich (15) der Schaufel angeordnet wird und mit hochfrequentem Strom mit einer Frequenz im Bereich von 0,75 MHz bis 1,2 MHz erregt wird.

2. Verfahren nach Anspruch 1, **dadurch gekennzeichnet, daß** wenigstens der Schaufelblattabschnitt (1) oder das weitere Schaufelteil (4,16,21) beim Positionieren reibschlüssig gehalten wird.

3. Verfahren nach einem der vorherigen Ansprüche, **dadurch gekennzeichnet, daß** wenigstens der Schaufelblattabschnitt (1) oder das weitere Schaufelteil (4,16,21) beim Positionieren formschlüssig gehalten wird.

4. Verfahren nach einem der vorherigen Ansprüche, **dadurch gekennzeichnet, daß** der Schritt Verschweißen in maximal 3 s durchgeführt wird.

5. Verfahren nach einem der vorherigen Ansprüche, **dadurch gekennzeichnet, daß** der Schaufelblattabschnitt (1) und das weitere Schaufelteil (4,16,21) beim Schritt Zusammenfahren nach Berührung ihrer Verbindungsflächen (2,3,6,18,24) noch maximal 1 mm aufeinander zu verfahren werden.

6. Verfahren nach einem der vorherigen Ansprüche, **dadurch gekennzeichnet, daß** als weiteres Schaufelteil ein Schaufelfuß (4) mit einem die stimseitige Verbindungsfläche (6) aufweisenden, zweiten Schaufelblattabschnitt (5) bereitgestellt wird.

7. Verfahren nach einem der vorherigen Ansprüche, **dadurch gekennzeichnet, daß** als weiteres Schaufelteil ein Deckbandabschnitt (16) mit einem die stimseitige Verbindungsfläche (18) aufweisenden, zweiten Schaufelblattabschnitt (17) bereitgestellt wird.

8. Verfahren nach einem der vorherigen Ansprüche, **dadurch gekennzeichnet, daß** eine erste Verbindungsfläche (2) des Schaufelblattabschnitts (1) mit einem einen zweiten Schaufelblattabschnitt (5) und die stimseitige Verbindungsfläche (6) aufweisenden Schaufelfuß (4) und eine gegenüberliegende, zweite stirnseitige Verbindungsfläche (3) des Schaufelblattabschnitts (1) mit einem einen zweiten Schaufelblattabschnitt (17) und die stimseitige Verbindungsfläche (18) aufweisenden Deckbandabschnitt (16) verschweißt wird.

9. Verfahren nach einem der vorherigen Ansprüche, **dadurch gekennzeichnet, daß** als weiteres Schaufelteil ein integral zu beschaufelnder Rotorträger (21) bereitgestellt wird, an dessen Umfangsfläche (22) mehrere vorstehende, jeweils die stirnseitige Verbindungsfläche (24) aufweisende Stumpfabschnitte (23) ausgebildet werden.

## Claims

1. Method of joining blade parts of a gas turbine, whereby a blade section (1) and at least another blade part (4, 16, 21) are initially prepared, the blade section (1) being provided with at least one terminal-end joint surface (2) and the other blade part (4, 16, 21) being provided with a terminal-end joint surface (6, 18, 24), an inductor (10) being disposed adjacent to the joint surfaces (2, 3, 6, 18, 24) of the blade section (1) and the second blade part (4, 16, 21), and the joint surfaces (2, 3, 6, 18, 24) of the blade section (1) and second blade part (4, 16, 21) are positioned substantially flush and at a distance apart from one another and the blade section (1) and the other blade part (4, 16,21) are welded to one another by exciting the inductor(10) with high-frequency current and moving them together to bring their joint surfaces (2, 3, 6, 18, 24) into contact with on another, **characterised in that** the joint surfaces (2, 3, 6, 18, 24) of the blade section (1) and the other blade part (4, 16, 21) are positioned at a distance of approximately 2mm apart from one another and the inductor (10) is arranged peripherally around the joint surfaces (2, 3, 6, 18, 24) of the blade section (1) and the other blade part (4, 16, 21), and the inductor (10) is disposed at a greater distance from the joining seam (20) in the region of the blade leading edge (13) and the blade trailing edge (14) than in the middle region (15) of the blade and is excited with high-frequency current at a frequency in the range of from 0.75 MHz to 1.2 MHz.

2. Method as claimed in claim 1, **characterised in that** at least the blade section (1) or the other blade part (4, 16, 21) is retained in a friction-fit hold during positioning.

3. Method as claimed in one of the preceding claims, **characterised in that** at least the blade section (1) or the other blade part (4, 16, 21) is retained in a form-fit during positioning.

4. Method as claimed in one of the preceding claims, **characterised in that** the welding step is performed in a maximum of 3 s.

5. Method as claimed in one of the preceding claims, **characterised in that** during the step of moving them together, once the blade section (1) and the other blade part (4, 16, 21) have made contact, their joint surfaces (2, 3, 6, 18, 24) are displaced onto one another by a further 1 mm at most.

6. Method as claimed in one of the preceding claims, **characterised in that** another blade part is prepared, in the form of a blade foot (4) having a second blade section (5) incorporating the terminal-end joint surface (6).

7. Method as claimed in one of the preceding claims, **characterised in that** another blade part is prepared in the form of a cover strip portion (16) with a second blade section (17) incorporating the terminal-end joint surface (18).

8. Method as claimed in one of the preceding claims, **characterised in that** a first joint surface (2) of the blade section (1) is welded to a blade foot (4) having a second blade section (5) incorporating the terminal-end joint surface (6), and an oppositely lying second terminal-end joint surface (3) of the blade section (1) is welded to a cover strip portion (16) having a second blade section (17) incorporating the terminal-end joint surface (18).

9. Method as claimed in one of the preceding claims, **characterised in that** an integrally bladed rotor bearing (21) is prepared as the other blade part, the circumferential surface (22) of which is provided with several upstanding stub portions (23), each having the terminal-end joint surface (24).

## Revendications

1. Procédé pour relier des parties de pale d'une turbine à gaz, un tronçon de pale (1) et au moins une autre partie de pale (4, 16, 21) étant préparés, le tronçon de pale (1) étant préparé avec au moins une surface d'assemblage (2) frontale, l'autre partie de pale (4, 16, 21) avec une surface d'assemblage (6, 18, 24) frontale, un inducteur (10) étant disposé à proximité des surfaces d'assemblage (2, 3, 6, 18, 24) du tronçon de pale (1) et de la deuxième partie de pale (4, 16, 21), les surfaces d'assemblage (2, 3, 6, 18, 24) du tronçon de pale (1) et de la deuxième partie de pale (4, 16, 21) étant positionnées essentiellement de manière alignée et à distance l'une par rapport à l'autre, le tronçon de pale (1) et l'autre partie de pale (4, 16, 21) étant soudés entre eux par excitation de l'inducteur (10) par un courant haute fréquence et par rapprochement mutuel avec contact de leurs surfaces d'assemblage (2, 3, 6, 18, 24), **caractérisé en ce que** les surfaces d'assemblage (2, 3, 6, 18, 24) du tronçon de pale (1) et de l'autre partie de pale (4, 16, 21) sont positionnées l'une par rapport à l'autre avec une distance approximative de 2 mm et que l'inducteur (10) est positionné circonférentiellement autour des surface d'assemblage (2, 3, 6, 18, 24) du tronçon de pale (1) et de l'autre partie de pale (4, 16, 21), l'inducteur (10) étant positionné dans la zone du bord d'attaque (13) et du bord de fuite (14) à une distance plus grande par rapport au joint d'assemblage (20) que dans la zone centrale (15) de la pale, et excité par un courant haute fréquence d'une fréquence dans la gamme de 0,75 MHz à 1,2 MHz.

2. Procédé selon la revendication 1, **caractérisé en ce qu'**au moins le tronçon de pale (1) ou l'autre partie de pale (4, 16, 21) est maintenu par friction lors du positionnement.

3. Procédé selon l'une des revendications précédentes, **caractérisé en ce qu'**au moins le tronçon de pale (1) ou l'autre partie de pale (4, 16, 21) est maintenu par complémentarité de forme lors du positionnement.

4. Procédé selon l'une des revendications précédentes, **caractérisé en ce que** l'opération de soudage se fait en 3 secondes au maximum.

5. Procédé selon l'une des revendications précédentes, **caractérisé en ce que** le tronçon de pale (1) et l'autre partie de pale (4, 16, 21), lors de l'opération de rapprochement mutuel, se rapprochent encore mutuellement de 1 mm au maximum, suite au contact de leurs surfaces d'assemblage (2, 3, 6, 18, 24).

6. Procédé selon l'une des revendications précédentes, **caractérisé en ce qu'**en tant qu'autre partie de pale, est préparé un pied de pale (4), avec un deuxième tronçon de pale (5) disposant de la surface d'assemblage (6) frontale.

7. Procédé selon l'une des revendications précédentes, **caractérisé en ce qu'**en tant qu'autre partie de pale, est préparé un tronçon de bandage (16), avec un deuxième tronçon de pale (17) disposant de la surface d'assemblage (18) frontale.

8. Procédé selon l'une des revendications précédentes, **caractérisé en ce qu'**une première surface d'assemblage (2) du tronçon de pale (1) avec un pied de pale (4) présentant un deuxième tronçon de pale (5) et la surface d'assemblage (6) frontale et une deuxième surface d'assemblage (3) frontale du tronçon de pale (1), se trouvant en face, avec un tronçon de bandage (16) présentant un deuxième tronçon de pale (17) et la surface d'assemblage (18) frontale sont soudées.

9. Procédé selon l'une des revendications précédentes, **caractérisé en ce qu'**en tant qu'autre partie de pale est préparé un porte-aubes (21) à équiper intégralement, à la surface périphérique (22) duquel plusieurs tronçons tronqués (23) faisant salllle sont formés, présentant chacun la surface d'assemblage (24) frontale.
